(19) Europäisches Patentamt
European Patent Office
Office européen des brevets

(11) **EP 2 934 130 B1**

(12) **EUROPÄISCHE PATENTSCHRIFT**

(45) Veröffentlichungstag und Bekanntmachung des Hinweises auf die Patenterteilung:
**31.10.2018 Patentblatt 2018/44**

(21) Anmeldenummer: **13818208.4**

(22) Anmeldetag: **16.12.2013**

(51) Int Cl.:
*A01N 33/22* *(2006.01)*    *A01N 47/12* *(2006.01)*
*A01N 43/82* *(2006.01)*    *A01P 13/00* *(2006.01)*

(86) Internationale Anmeldenummer:
**PCT/EP2013/076650**

(87) Internationale Veröffentlichungsnummer:
**WO 2014/095684 (26.06.2014 Gazette 2014/26)**

(54) **HERBIZIDE MITTEL ENTHALTEND ACLONIFEN**

HERBICIDAL AGENTS CONTAINING ACLONIFEN

AGENTS HERBICIDES CONTENANT DE L'ACLONIFÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2012 DE 102012223500**

(43) Veröffentlichungstag der Anmeldung:
**28.10.2015 Patentblatt 2015/44**

(73) Patentinhaber: **Bayer CropScience Aktiengesellschaft**
**40789 Monheim am Rhein (DE)**

(72) Erfinder:
• **SCHREIBER, Dominique**
**F-37500 Anche (FR)**
• **WILDE, Thomas**
**61276 Weilrod-Hasselbach (DE)**
• **BRÜGGEMANN, Dirk**
**21756 Osten (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**WO-A2-2012/024297 US-A1- 2002 004 457**

**Beschreibung**

Die Erfindung liegt auf dem technischen Gebiet der Pflanzenschutzmittel, die gegen Schadpflanzen z.B. in Pflanzenkulturen eingesetzt werden können und als Wirkstoffe in den herbiziden Mitteln eine Kombination von Aclonifen und einem weiteren Herbizid enthalten.

Der herbizide Wirkstoff Aclonifen (Hersteller: Bayer CropScience) gehört zur Gruppe der Diphenylether und Mischungen dieser Gruppe mit anderen Herbiziden sind literaturbekannt: zum Beispiel (z.B.) US 4394159 A, EP 0007482 A. In US 5858920 B werden unter anderem Heteroaryloxy-acetamide in Mischung mit Einzelwirkstoffen, wie z.B. dem Herbizid Aclonifen, beschrieben, allerdings ohne experimentelle Daten für den synergistischen Effekt.

Der herbizide Wirkstoff Aclonifen zeichnet sich durch eine breite Wirksamkeit gegen mono- und dikotyle Schadpflanzen aus und wird z.B. überwiegend im Vorauflauf in gesäten und/oder gepflanzten landwirtschaftlichen oder gärtnerischen Kulturpflanzen sowie auf Nicht-Kulturflächen eingesetzt (z.B. in Getreide wie beispielsweise Weizen, Gerste, Roggen, Hafer, Triticale, Reis, Mais, Hirse, Zuckerrübe, Zuckerrohr, Raps, Baumwolle, Sonnenblumen, Soja, Kartoffel, Tomaten, Bohnen, Flachs, Weidegras, Obstanbauanlagen, Plantagenkulturen, Grün- und Rasenflächen sowie Plätzen von Wohn- und Industrieanlagen, Gleisanlagen).

Als Einzelwirkstoff ist Aclonifen beispielweise unter den Handelsnamen Challenge®, Bandur®, Fenix® und Prodigio® im Handel. Neben der Verwendung des Einzelwirkstoffs sind auch Mischungen von Aclonifen mit anderen Herbiziden literaturbekannt (z.B. AU 635599 B, AU 642986 B, AU 641500 B, AU 659028 B, AU 663028 B, AU 712501 B, US 6046133 B, EP 0958742 A) und im Handel: Mischung mit Amitrole (z.B. Derby®, Illico TL Express®, Muleta®), mit Isoxaflutole (z.B. Acajou®, Lagon®, Merlin Combi®), mit Alachlor (z.B. Manager®), mit Flurtamone (z.B. Nikeyl®), mit Oxadiargyl (z.B. Opalo®, Carioca®) und mit Oxadiazon (z.B. Phare®, Cline®).

Trotz der guten Wirkung von Aclonifen als Einzelwirkstoff und in den bereits bekannten Mischungen besteht immer noch Notwendigkeit zur Verbesserung des Anwendungsprofils dieses Wirkstoffs in speziellen Einsatzbereichen. Die Gründe hierfür sind vielfältig, wie z.B. weitere Erhöhung der Wirksamkeit in speziellen Anwendungsbereichen und bei unterschiedlichen Bodeneigenschaften sowie Bewässerungsbedingungen, Steigerung der Kulturpflanzenverträglichkeit, Reaktion auf neue Produktionstechniken in einzelnen Kulturen und/oder auf das zunehmende Auftreten von herbizid-resistenten Schadpflanzen (z.B. in Getreide, Reis und Mais aber auch in Kartoffeln, Sonnenblumen, Erbsen, Karotten und Fenchel) mit beispielsweise 'Target-Site Resistance' (z.B. TSR (Abkürzung: TSR; wobei die Unkrautpopulationen Biotypen mit einer wirkortspezifischen Resistenz enthalten, d.h. durch natürliche Mutationen in der Gensequenz verändert sich die Bindungsstelle am Wirkort, sodass die Wirkstoffe nicht mehr oder unzureichend binden und entsprechend wirken können) und 'Enhanced Metabolic Resistance' (Abkürzung: EMR; wobei die Unkrautpopulationen Biotypen mit einer metabolischen Resistenz enthalten, d.h. die Pflanzen besitzen die Fähigkeit über Enzymkomplexe die Wirkstoffe schneller zu metabolisieren, meint die Wirkstoffe werden in der Pflanze schneller abgebaut). Gemäß dem 'Herbicide Resistance Action Committee' (Abkürzung: HRAC; einer Arbeitsgruppe der forschenden Industrie) werden Resistenzen für zugelassenen Wirkstoffe nach ihrem Wirkmechanismus (syn. Mode of Action; MoA) einteilt: z.B. HRAC Gruppe A = Acetylcoenzym-A-Carboxylase Inhibitoren (MoA: ACCase) oder HRAC Gruppe B = Acetolactatsynthase Inhibitoren (MoA: ALS). Diese Verbesserungen des Anwendungsprofils können sowohl einzeln wie aber auch in Kombination untereinander von Bedeutung sein.

Eine Möglichkeit zur Verbesserung des Anwendungsprofils eines Herbizids kann in der Kombination des Wirkstoffs mit einem oder mehreren geeigneten anderen Wirkstoffen bestehen. Allerdings treten bei der kombinierten Anwendung mehrerer Wirkstoffe nicht selten Phänomene der chemischen, physikalischen und biologischen Unverträglichkeit auf, z.B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt. Erwünscht sind auch Kombinationen von Wirkstoffen, die die Kulturpflanzenverträglichkeit allgemein erhöhen und/oder bei speziellen Produktionstechniken eingesetzt werden können. Hierzu gehört beispielsweise eine Reduktion der Saattiefe, welche aus Kulturverträglichkeitsgründen häufig nicht verwendet werden kann. Dadurch erzielt man allgemein einen schnelleren Auflauf der Kultur, reduziert deren Risiko gegenüber Auflaufkrankheiten (wie z.B. Pythium und Rhizoctonia), verbessert die Überwinterungsfähigkeit und den Bestockungsgrad. Dies gilt auch für Spät-Saaten, die ansonsten nicht möglich wären aufgrund des Kulturverträglichkeitsrisikos.

Aufgabe der vorliegenden Erfindung bestand in der Verbesserung des Anwendungsprofils des herbiziden Wirkstoffs Aclonifen mit Hinblick auf:

- ein vereinfachteres Applikationsverfahren, welches die Kosten für den Anwender reduzieren und sich dadurch schonender auf die Umwelt auswirken würde;
- eine Verbesserung und Anwendungsflexibilität der Wirkungssicherheit auf Böden mit unterschiedlichen Bodeneigenschaften (z.B. Bodentyp, Bodenfeuchte);

- eine Verbesserung und Anwendungsflexibilität der Wirkungssicherheit bei unterschiedlichen Bewässerungsbedingungen;
- eine Verbesserung die Anwendungsflexibilität der Wirkstoffe vom Vorauflauf bis in den Nachauflauf der Kultur- und der Unkrautpflanzen, insbesondere bei monocotylen Unkrautpflanzen;
- eine Verbesserung der Wirkungssicherheit auf resistente Unkrautpflanzenarten, welches eine neue Möglichkeit für ein effektives Resistenzmanagement ermöglichen würde;

wobei die beiden zuletzt genannten Aufgaben besonders im Vordergrund standen.

Gelöst wurde diese Aufgabe durch Bereitstellung von herbiziden Mitteln enthaltend Aclonifen und die weiteren Herbiziden Tri-allate und Flufenacet.

Ein Gegenstand der Erfindung sind somit herbizide Mittel, enthaltend als einzige herbizid wirksame Bestandteile:

A) Aclonifen (Komponente A),
B) Tri-allate (Komponente B) und
C) Flufenacet (Komponente C).

Die in dieser Beschreibung mit ihrem "common name" genannten Wirkstoffe (herbizid wirksamen Bestandteile) sind beispielsweise aus "The Pesticide Manual", 15. Auflage 2009, oder in dem entsprechenden "The e-Pesticide Manual", Version 5.2 (2008-2011), jeweils herausgegeben vom BCPC (British Crop Protection Council), und aus "The Compendium of Pesticide Common Names" im Internet (Webseite: http://www.alanwood.net/pesticides/) bekannt.

Die herbizid wirksamen Bestandteile Komponente A, B und C werden im Folgenden summarisch als "(Einzel-)Wirkstoffe", "(Einzel-)Herbizide" oder als "Herbizid-Komponenten" bezeichnet und sind als Einzelstoffe oder als Mischung z.B. bekannt aus "The Pesticide Manual", 15. Auflage (s.o.) und haben dort folgende Eintragungsnummern (Abkürzung: "PM #.." mit der jeweilig laufenden Eintragsnummer/"sequentiell entry number"):

- Komponente A: Aclonifen (PM #10), z.B. 2-chloro-6-nitro-3-phenoxybenzenamine;
- Komponente B: Tri-allate (PM # 867), syn. triallate, z.B. *S*-(2,3,3-trichloro-2-propenyl) bis(1-methylethyl)carbamothioate;
- Komponente C: Flufenacet (PM #392), syn. fluthiamide, z.B. *N*-(4-fluorophenyl)-*N*-(1-methylethyl)-2-[[5-(trifluoromethyl)-1,3,4-thiadiazol-2-yl]oxy]acetamide.

Wenn im Rahmen dieser Beschreibung die Kurzform des "common name" eines Wirkstoffs verwendet wird, so sind damit - soweit anwendbar - jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfassten Verbindungen, häufig eine bevorzugte Verbindung.

Soweit in dieser Beschreibung die Abkürzung "AS/ha" verwendet wird, bedeutet dies "Aktivsubstanz pro Hektar", bezogen auf 100%igen Wirkstoff. Alle Prozentangaben in der Beschreibung sind Gewichtsprozente (Abkürzung: "Gew.-%") und beziehen sich, wenn nicht anders definiert, auf das relative Gewicht der jeweiligen Komponente bezogen auf das Gesamtgewicht des herbiziden Mittels (z.B. als Formulierung).

Die erfindungsgemäßen herbiziden Mittel weisen einen herbizid wirksamen Gehalt an den Komponenten A, B und C auf und können weitere Bestandteile enthalten, z.B. agrochemische Wirkstoffe aus der Gruppe der Insektizide, Fungizide und Safener und/oder im Pflanzenschutz übliche Zusatzstoffe und/oder Formulierungshilfsmittel, oder zusammen mit diesen eingesetzt werden.

Die erfindungsgemäßen herbiziden Mittel weisen in bevorzugter Ausführungsform als Verbesserung des Anwendungsprofils synergistische Wirkungen auf. Diese synergistischen Effekte können z.B. bei gemeinsamer Ausbringung der Herbizid-Komponenten beobachtet werden, sie können jedoch häufig auch bei zeitlich versetzter Anwendung (Splitting) festgestellt werden. Möglich ist auch die Anwendung der einzelnen Herbizide oder der Herbizid-Kombinationen in mehreren Portionen (Sequenzanwendung), z.B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen herbiziden Mittel.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Herbizid-Komponenten und deren Derivate im herbiziden Mittel kann in weiten Bereichen variieren. Bei Anwendungen mit Aufwandmengen von 120 - 10600 g AS/ha der Herbizid-Komponenten wird im Vor- und Nachauflaufverfahren ein relativ breites Spektrum an annuellen und perennierenden Unkräutern, Ungräsern sowie Cyperaceen bekämpft.

Die Aufwandmengen der Herbizid-Komponenten stehen im herbiziden Mittel im nachstehend angegebenen Gewichtsverhältnis zueinander:

(Bereich Komponente A) : (Bereich Komponente B) : (Bereich Komponente C)
im allgemeinen (1 - 100) : (1 - 100) : (1 - 2000),
vorzugsweise (1 - 25) : (1 - 25) : (1 - 40),
besonders bevorzugt (1 -10) : (1 -10) : (1 - 10).

Die Aufwandmengen der jeweiligen Herbizid-Komponenten im herbiziden Mittel sind:

- Komponente A: im allgemeinen 10 - 5000 g AS/ha, vorzugsweise 80 - 3000 g AS/ha, besonders bevorzugt 80 - 1000 g AS/ha Aclonifen;
- Komponente B: im allgemeinen 100 - 3600 g AS/ha, vorzugsweise 250 - 2000 g AS/ha, besonders bevorzugt 250 - 1600 g AS/ha Tri-allate;
- Komponente C: im allgemeinen 10 - 2000 g AS/ha, vorzugsweise 30 - 400 g AS/ha, besonders bevorzugt 50 - 300 g AS/ha Flufenacet.

Entsprechend können aus den oben genannten Aufwandmengen die Gewichtsprozente (Gew.-%) der Herbizid-Komponenten bezogen auf das Gesamtgewicht der herbiziden Mittel berechnet werden, die zusätzlich auch noch weitere Bestandteile enthalten können.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen wie Unkräuter, Ungräser oder Cyperaceen auf, einschließlich Arten die resistent sind gegen herbizide Wirkstoffe, wie z.B. Glyphosate, Glufosinate, Atrazin, Photosyntheseinhibitoren, Imidazolinon-Herbizide, Sulfonylharnstoffe, (Hetero-)aryloxy-aryloxyalkylcarbonsäuren bzw. -phenoxyalkylcarbonsäuren (sog. 'Fops'), Cyclohexanedionoxime (sog. 'Dims') oder Auxininhibitoren. Auch schwer bekämpfbare perennierende Unkräuter, die aus Rhizomen, Wurzelstöcken oder anderen Dauerorganen austreiben, werden durch die Wirkstoffe gut erfasst. Dabei können die Substanzen z.B. im Vorsaat-, Vorauflauf- oder Nachauflaufverfahren ausgebracht werden, z.B. gemeinsam oder getrennt.

Im Einzelnen seien beispielhaft einige Vertreter der mono- und dikotylen Unkrautflora genannt, die durch die erfindungsgemäßen herbiziden Mittel kontrolliert werden können, ohne dass durch die Nennung eine Beschränkung auf bestimmte Arten erfolgen soll.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfasst.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. Eclipta spp., Sesbania spp., Aeschynomene spp. und Viola spp., Xanthium spp., auf der annuellen Seite sowie Convolvulus, Cirsium, Rumex und Artemisia bei den perennierenden Unkräutern.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von zwei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird. Die erfindungsgemäßen herbiziden Mittel können auch in Reis in das Wasser appliziert werden und werden dann über Boden, Spross und Wurzel aufgenommen.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Mitteln ist in der Regel günstig. Als besonderer Vorteil fällt ins Gewicht, dass die in den erfindungsgemäßen Mitteln verwendeten und wirksamen Dosierungen der Komponenten A, B und C so gering eingestellt werden können, dass ihre Bodenwirkung optimal niedrig ist. Somit wird deren Einsatz nicht nur in empfindlichen Kulturen erst möglich, sondern Grundwasser-Kontaminationen werden auch praktisch vermieden. Durch die erfindungsgemäße Kombination von Wirkstoffen wird eine erhebliche Reduzierung der nötigen Aufwandmenge der Wirkstoffe ermöglicht.

Bei der gemeinsamen Anwendung der Komponenten A, B und C in den erfindungsgemäßen Mitteln treten in bevorzugter Ausführungsform als Verbesserung des Anwendungsprofils überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine höhere und/oder längere Wirkungsstärke (Dauerwirkung); die Bekämpfung eines breiteren Spektrums von Unkräutern, Ungräsern und Cyperaceen, zum Teil mit nur einer bzw. wenigen Applikationen; schnelleres Einsetzen der herbiziden Wirkung; Kontrolle bislang nicht erfasster Arten (Lücken); Kontrolle z.B. von Arten, die Toleranzen oder Resistenzen gegenüber einzelnen oder mehreren Herbiziden aufweisen; Ausdehnung des Anwendungszeitraums und/oder eine Reduzierung der Anzahl notwendiger Einzelanwendungen bzw. eine Reduzierung der Aufwandmenge insgesamt und - als Resultat für den Anwender - ökonomisch und ökologisch vorteilhaftere Unkrautbekämpfungssysteme.

Die genannten Eigenschaften und Vorteile sind in der praktischen Unkrautbekämpfung gefordert, um landwirtschaftliche/ forstwirtschaftliche/ gärtnerische Kulturen, Grünland/Weideflächen oder Kulturen zur Energiegewinnung (Biogas, Bio-Ethanol) von unerwünschten Konkurrenzpflanzen freizuhalten und damit die Erträge qualitativ und quantitativ zu sichern und/oder zu erhöhen. Der technische Standard wird durch diese neuen Kombinationen in den erfindungsgemäßen herbiziden Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Schadpflanzen aufweisen, werden die Kulturpflanzen nur unwesentlich oder gar nicht geschädigt.

Darüber hinaus können die erfindungsgemäßen Mittel teilweise wachstumsregulatorische Eigenschaften bei den Kulturpflanzen aufweisen. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihres verbesserten Anwendungsprofils können die erfindungsgemäßen Mittel auch zur Bekämpfung von Schadpflanzen in bekannten Pflanzenkulturen oder noch zu entwickelnden toleranten oder gentechnisch veränderten Kultur- und Energiepflanzen eingesetzt werden. Die transgenen Pflanzen (GMOs) zeichnen sich in der Regel durch besondere vorteilhafte Eigenschaften aus, beispielsweise durch Resistenzen gegenüber bestimmten Pestiziden, vor allem bestimmten Herbiziden (wie z.B. Resistenzen gegenüber den Komponenten A, B und C in den erfindungsgemäßen Mitteln), beispielsweise durch Resistenzen gegenüber Schadinsekten, Pflanzenkrankheiten oder Erregern von Pflanzenkrankheiten wie bestimmten Mikroorganismen wie Pilzen, Bakterien oder Viren. Andere besondere Eigenschaften betreffen z.B. das Erntegut hinsichtlich Menge, Qualität, Lagerfähigkeit, sowie der Zusammensetzung von speziellen Inhaltsstoffen. So sind transgene Pflanzen mit erhöhtem Stärkegehalt oder veränderter Qualität der Stärke oder solche mit anderer Fettsäurezusammensetzung des Ernteguts bzw. erhöhtem Vitamingehalt oder energetischer Eigenschaften bekannt. Weitere besondere Eigenschaften können in einer Toleranz oder Resistenz gegen abiotische Stressoren z.B. Hitze, Kälte, Trockenheit, Salz und ultraviolette Strahlung liegen. Gleichermaßen können die erfindungsgemäßen Mittel aufgrund ihrer herbiziden und weiteren Eigenschaften auch zur Bekämpfung von Schadpflanzen in Kulturen von bekannten oder noch zu entwickelnden durch Mutantenselektion erhaltenen Pflanzen eingesetzt werden, sowie aus Kreuzungen von mutagenen und transgenen Pflanzen.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z.B. EP 0221044 A, EP 0131624 A). Beschrieben wurden beispielsweise in mehreren Fällen: gentechnische Veränderungen von Kulturpflanzen zwecks Modifikation der in den Pflanzen synthetisierten Stärke (z.B. WO 92/011376 A, WO 92/014827 A, WO 91/019806 A); transgene Kulturpflanzen, welche gegen bestimmte Herbizide vom Typ Glufosinate (vgl. z.B. EP 0242236 A, EP 0242246 A) oder Glyphosate (WO 92/000377 A) oder der Sulfonylharnstoffe (EP 0257993 A, US 5,013,659) oder gegen Kombinationen oder Mischungen dieser Herbizide durch "gene stacking" resistent sind, wie transgenen Kulturpflanzen z. B. Mais oder Soja mit dem Handelsnamen oder der Bezeichnung Optimum™ GAT™ (Glyphosate ALS Tolerant); transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP 0142924 A, EP 0193259 A); transgene Kulturpflanzen mit modifizierter Fettsäurezusammensetzung (WO 91/013972 A); gentechnisch veränderte Kulturpflanzen mit neuen Inhalts- oder Sekundärstoffen z.B. neuen Phytoalexinen, die eine erhöhte Krankheitsresistenz verursachen (EP 0309862 A, EP 0464461 A); gentechnisch veränderte Pflanzen mit reduzierter Photorespiration, die höhere Erträge und höhere Stresstoleranz aufweisen (EP 0305398 A); transgene Kulturpflanzen, die pharmazeutisch oder diagnostisch wichtige Proteine produzieren ("molecular pharming"); transgene Kulturpflanzen, die sich durch höhere Erträge oder bessere Qualität auszeichnen; transgene Kulturpflanzen die sich durch eine Kombinationen z.B. der o.g. neuen Eigenschaften auszeichnen ("gene stacking").

Zahlreiche molekularbiologische Techniken, mit denen neue transgene Pflanzen mit veränderten Eigenschaften hergestellt werden können, sind im Prinzip bekannt; siehe z.B. I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431). Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z.B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996. Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codierenden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z.B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs (z.B. Schadpflanzen), vorzugsweise in Pflanzenkulturen wie Getreide (z.B. Hart- und Weichweizen, Gerste, Roggen, Hafer, Kreuzungen davon wie Triticale, gepflanztem oder gesäten Reis unter 'Upland'- oder 'Paddy'-Bedingungen, Mais, Hirsen wie beispielsweise Sorghum), Zuckerrübe, Zuckerrohr, Raps, Baumwolle, Sonnenblumen, Soja, Kartoffel, Tomaten, Bohnen wie beispielsweise Buschbohne und Pferdebohne, Flachs, Weidegras, Obstanbauanlagen, Plantagenkulturen, Grün- und Rasenflächen sowie Plätzen von Wohn- und Industrieanlagen, Gleisanlagen, besonders bevorzugt in monokotylen Kulturen wie Getreide, z.B. Weizen, Gerste, Roggen, Hafer, Kreuzungen davon wie Triticale, Reis, Mais und Hirse sowie dikotylen Kulturen wie Sonnenblumen, Soja, Kartoffel, Tomaten, Erbsen, Karotten und Fenchel, wobei man die Komponenten A, B und C der erfindungsgemäßen herbiziden Mittel gemeinsam oder getrennt, z.B. im Vorauflauf (sehr früh bis spät), Nachauflauf oder im Vor- und Nachauflauf, auf die Pflanzen, z.B. Schadpflanzen, Pflanzenteile, Pflanzensamen oder die Fläche auf der die Pflanzen wachsen, z.B. die Anbaufläche appliziert.

Gegenstand der Erfindung ist auch die Verwendung der erfindungsgemäßen herbiziden Mittel enthaltend die Komponenten A, B und C zur Bekämpfung von Schadpflanzen, vorzugsweise in Pflanzenkulturen, vorzugsweise in den oben genannten Pflanzenkulturen. Weiterhin ist Gegenstand der Erfindung auch die Verwendung der erfindungsgemäßen herbiziden Mittel enthaltend die Komponenten A, B und C zur Bekämpfung von herbizid-resistenten Schadpflanzen (z.B. TSR und EMR Resistenzen bei ALS und ACCase), vorzugsweise in Pflanzenkulturen, vorzugsweise in den oben genannten Pflanzenkulturen.

Gegenstand der Erfindung ist auch das Verfahren mit den erfindungsgemäßen herbiziden Mittel enthaltend die Komponenten A, B und C zur selektiven Bekämpfung von Schadpflanzen in Pflanzenkulturen, vorzugsweise in den oben genannten Pflanzenkulturen, sowie dessen Verwendung.

Gegenstand der Erfindung ist auch das Verfahren zur Bekämpfung von unerwünschtem Pflanzenwuchs mit den erfindungsgemäßen herbiziden Mittel enthaltend die Komponenten A, B und C, sowie dessen Verwendung, in Pflanzenkulturen, die gentechnisch verändert (transgen) oder durch Mutationsselektion erhalten wurden, und welche gegen Wuchsstoffe, wie z.B. 2,4 D, Dicamba oder gegen Herbizide, die essentielle Pflanzenenzyme, z.B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, oder gegen beliebige Kombinationen dieser Wirkstoffe, resistent sind. Besonders bevorzugt können die erfindungsgemäßen herbiziden Mittel in transgenen Kulturpflanzen eingesetzt werden, die gegen eine Kombination von Glyphosaten und Glufosinaten, Glyphosaten und Sulfonylharnstoffen oder Imidazolinonen resistent sind. Ganz besonders bevorzugt können die erfindungsgemäßen herbiziden Mittel in transgenen Kulturpflanzen wie z. B. Mais oder Soja mit dem Handelsnamen oder der Bezeichnung Optimum™ GAT™ (Glyphosate ALS Tolerant) eingesetzt werden.

Gegenstand der Erfindung ist auch die Verwendung der erfindungsgemäßen herbiziden Mittel enthaltend die Komponenten A, B und C zur Bekämpfung von Schadpflanzen, vorzugsweise in Pflanzenkulturen, vorzugsweise in den oben genannten Pflanzenkulturen.

Die erfindungsgemäßen herbiziden Mittel können auch nicht-selektiv zur Bekämpfung unerwünschten Pflanzenwuchses eingesetzt werden, z.B. in Plantagenkulturen, an Wegrändern, Plätzen, Industrieanlagen oder Eisenbahnanlagen; oder selektiv zur Bekämpfung unerwünschten Pflanzenwuchses in Kulturen zur Energiegewinnung (Biogas, Bio-Ethanol) eingesetzt werden.

Die erfindungsgemäßen herbiziden Mittel können sowohl als Mischformulierungen der Komponenten A, B und C und gegebenenfalls mit weiteren agrochemischen Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden. Unter Umständen können die Mischformulierungen mit anderen Flüssigkeiten oder Feststoffen verdünnt oder auch unverdünnt angewendet werden.

Die Komponenten A, B und C oder deren Unterkombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wässrige Lösungen (SL), Emulsionen (EW) wie Öl-in-Wasser- und Wasser-in-Öl-Emulsionen, versprühbare Lösungen oder Emulsionen, Suspensionskonzentrate (SC), Dispersionen, Öldispersionen (OD), Suspoemulsionen (SE), Stäubemittel (DP), Beizmittel, Granulate zur Boden- oder Streuapplikation (GR) oder wasserdispergierbare Granulate (WG), Ultra-Low-Volume-Formulierungen, Mikrokapsel- oder Wachsdispersionen.

Die einzelnen Formulierungstypen sind im Prinzip bekannt und werden beispielsweise beschrieben in: "Manual on Development and Use of FAO and WHO Specifications for Pesticides", FAO and WHO, Rome, Italy, 2002; Winnacker-Küchler, "Chemische Technologie", Band 7, C. Hanser Verlag München, 4. Aufl. 1986; van Valkenburg, "Pesticide Formulations", Marcel Dekker N.Y. 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen agrochemischen Wirkstoffen, wie Fungizide, Insektizide, sowie Safener, Düngemittel und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben den Wirkstoffen außer einem oder mehreren Verdünnungs- oder Inertstoffen noch Tenside ionischer und/oder nichtionischer Art (Netzmittel, Dispergiermittel), z.B. polyoxethylierte Alkylphenole, polyethoxylierte Fettalkohole oder -Fettamine, Propylenoxid-Ethylenoxid-Copolymerisate, Alkansulfonate oder Alkylbenzolsulfonate oder Alkylnaphthalinsulfonaten, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen der Wirkstoffe in einem organischen Lösungsmittel oder Lösungsmittelgemisch, z.B. Butanol, Cyclohexanon, Dimethylformamid, Acetophenon, Xylol oder auch höhersiedenden Aromaten oder Kohlenwasserstoffe unter Zusatz von einem oder mehreren ionischen und/oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Copolymerisate, Alkylpolyether, Sorbitanfettsäureester, Polyoxyethylensorbitanfettsäureester oder Polyoxyethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate sind Wasser-basierte Suspensionen von Wirkstoffen. Sie können beispielsweise durch Nass-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Öldispersionen sind Öl-basierte Suspensionen von Wirkstoffen, wobei unter Öl jegliche organische Flüssigkeit zu verstehen ist, z. B. Pflanzenöle, aromatische oder aliphatische Lösemittel, oder Fettsäurealkylester. Sie können beispielsweise durch Nass-Vermahlung mittels handelsüblicher Perlmühlen und gegebenenfalls Zusatz von weiteren Tensiden (Netzmittel, Dispergiermittel), wie sie z.B. oben bei den anderen Formulierungstypen bereits aufgeführt sind, hergestellt werden. Neben dem suspendierten Wirkstoff bzw. Wirkstoffen, können weitere Wirkstoffe in der Formulierung auch gelöst vorliegen.

Emulsionen, z.B. Öl-in-Wasser-Emulsionen (EW), lassen sich beispielsweise mittels Rührern, Kolloidmühlen und/oder statischen Mischern aus Mischungen aus Wasser und mit Wasser nicht mischbaren organischen Lösungsmitteln und gegebenenfalls von weiteren Tensiden, wie sie z.B. oben bei den anderen Formulierungstypen bereits aufgeführt sind, herstellen. Die Wirkstoffe liegen hierbei in gelöster Form vor.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite, Kreide oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischern und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57. Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe der Herbizid-Komponenten, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Die herbizide Wirkung der erfindungsgemäßen Herbizid-Kombinationen kann z.B. durch oberflächenaktive Substanzen verbessert werden, beispielsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten oder -phosphaten, vorliegen, die z.B. als Alkalisalze (z.B. Natrium- und Kaliumsalze) oder Ammoniumsalze, oder auch als Erdalkalisalze wie Magnesiumsalze verwendet werden, wie $C_{12}/C_{14}$-Fettalkohol-diglykolethersulfat-Natrium (Genapol® LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende ($C_{10}$- $C_{18}$)-, vorzugsweise ($C_{10}$-$C_{14}$)-Fettalkohol-Polyglykolether (z.B. Isotridecylalkohol-Polyglykolether) z.B. aus der Genapol® X-Reihe wie Genapol® X-030, Genapol® X-060, Genapol® X-080 oder Genapol® X-150 (alle von Clariant GmbH).

Die vorliegende Erfindung umfasst ferner die Kombination der Komponenten A, B und C mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind $C_{12}/C_{14}$-Fettalkohol-diglykolethersulfat-Natrium (Genapol® LRO, Clariant GmbH) und Isotridecylalkohol-Polyglykolether, mit 3 - 15 Ethylenoxideneinheiten, z.B. aus der Genapol® X-Reihe wie Genapol® X-030, Genapol® X-060, Genapol® X-080 und Genapol® X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide, unter anderem auch für Herbizide aus der Reihe der Imidazolinone geeignet sind (siehe z.B. EP-A-0502014).

Die herbizide Wirkung der erfindungsgemäßen Herbizid-Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z.B. Alkylester wie Rapsölmethylester oder Rapsölethylester.

Die Pflanzenöle sind bevorzugt Ester von $C_{10}$-$C_{22}$-, vorzugsweise $C_{12}$-$C_{20}$-Fettsäuren. Die $C_{10}$-$C_{22}$-Fettsäureester sind beispielsweise Ester ungesättigter oder gesättigter $C_{10}$-$C_{22}$-Fettsäuren, insbesondere mit gerader Kohlenstoffatomzahl, z.B. Erucasäure, Laurinsäure, Palmitinsäure und insbesondere $C_{18}$-Fettsäuren wie Stearinsäure, Ölsäure, Linolsäure oder Linolensäure.

Beispiele für $C_{10}$-$C_{22}$-Fettsäure-Ester sind Ester, die durch Umsetzung von Glycerin oder Glykol mit den $C_{10}$-$C_{22}$-Fettsäuren erhalten werden, wie sie z.B. in Ölen aus ölliefernden Pflanzenarten enthalten sind, oder $C_1$-$C_{20}$-Alkyl-$C_{10}C_{22}$-Fettsäure-Ester, wie sie z.B. durch Umesterung der vorgenannten Glycerin- oder Glykol-$C_{10}$-$C_{22}$-Fettsäure-Ester mit $C_1$-$C_{20}$-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als $C_1$-$C_{20}$-Alkyl-$C_{10}$-$C_{22}$-Fettsäure-Ester bevorzugt sind Methylester, Ethylester, Propylester, Butylester, 2-ethyl-hexylester und Dodecylester. Als Glykol- und Glycerin-$C_{10}$-$C_{22}$-Fettsäure-Ester bevorzugt sind die einheitlichen oder gemischten Glykolester und Glycerinester von $C_{10}$-$C_{22}$-Fettsäuren, insbesondere solcher Fettsäuren mit gerader Anzahl an Kohlenstoffatomen, z.B. Erucasäure, Laurinsäure, Palmitinsäure und insbesondere $C_{18}$-Fettsäuren wie Stearinsäure, Ölsäure, Linolsäure oder Linolensäure.

Die Pflanzenöle können in den erfindungsgemäßen herbiziden Mitteln z.B. in Form kommerziell erhältlicher ölhaltiger Formulierungszusatzstoffe, insbesondere solcher auf Basis von Rapsöl wie Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Die vorliegende Erfindung umfasst in einer weiteren Ausführungsform Kombinationen der Komponenten A, B und C mit den vorgängig genannten Pflanzenölen wie Rapsöl, bevorzugt in Form kommerziell erhältlicher ölhaltiger Formulierungszusatzstoffe, insbesondere solcher auf Basis von Rapsöl wie Hasten®, Actirob®B, Rako-Binol®, Renol® oder Stefes Mero®.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Formulierungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen herbiziden Mittel mit den Komponenten A, B und C hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden.

A. Formulierungsbeispiele allgemeiner Art

a) Ein Stäubemittel wird erhalten, indem man 10 Gew.-Teile eines Wirkstoffs/Wirkstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Ton als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbaren Suspensionskonzentrat wird erhalten, indem man 20 Gew.-Teile eines Wirkstoffs/Wirkstoffgemischs mit 5 Gew.-Teilen Tristyrylphenolpolyglykolether (Soprophor BSU), 1 Gew.-Teil Ligninsulfonat-Natrium (Vanisperse CB) und 74 Gew.-Teilen Wasser mischt und in einer Reibkugelmühle auf eine Feinheit von unter 5 Mikron vermahlt.

d) Eine in Wasser leicht verteilbare Öldispersion wird erhalten, indem man 20 Gew.-Teile eines Wirkstoffs/Wirkstoffgemischs mit 6 Gew.-Teilen Alkylphenolpolyglykolether (Triton® X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

e) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

f) Ein in Wasser dispergierbares Granulat wird erhalten indem man

75 Gew.-Teile eines Wirkstoffs/Wirkstoffgemischs,

10 Gew.-Teile ligninsulfonsaures Calcium,

5 Gew.-Teile Natriumlaurylsulfat,

3 Gew.-Teile Polyvinylalkohol und

7 Gew.-Teile Kaolin

mischt, auf einer Stiftmühle mahlt und das Pulver in einem Wirbelbett durch Aufsprühen von Wasser als Granulierflüssigkeit granuliert.

g) Ein in Wasser dispergierbares Granulat wird auch erhalten, indem man

25 Gew.-Teile eines Wirkstoffs/Wirkstoffgemischs,

5 Gew.-Teile 2,2'-dinaphthylmethan-6,6'-disulfonsaures Natrium,

2 Gew.-Teile oleoylmethyltaurinsaures Natrium,

1 Gew.-Teil Polyvinylalkohol,

17 Gew.-Teile Calciumcarbonat und

50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

a) Methodenbeschreibungen

Gewächshausversuche

In der Standardversuchsdurchführung wurden die Samen unterschiedlicher Unkraut und Ungras Biotypen (Herkünfte) in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden auf einer Laborspritzbahn mit Spritzbrühen mit den erfindungsgemäßen Mitteln, Mischungen des Standes der Technik beziehungsweise mit den einzeln angewandten Komponenten behandelt. Die Applikation der als WG, WP, EC oder anders formulierten Wirkstoffe oder Wirkstoffkombinationen erfolgte zu den entsprechenden Wachstumsstadien der Pflanzen. Die Wasseraufwandmenge für die Spritzapplikation betrug 100-600 l/ha. Nach der Behandlung wurden die Pflanzen wieder in den Gewächshäusern aufgestellt.

Etwa 3 Wochen nach der Applikation wurde die Boden- oder/und Blattwirkung gemäß einer Skala von 0-100% optisch im Vergleich zu einer unbehandelten Vergleichsgruppe bewertet: 0% = keine erkennbare Wirkung im Vergleich zur unbehandelten Vergleichsgruppe; 100% = vollständige Wirkung im Vergleich zur unbehandelten Vergleichsgruppe.

(Anmerkungen: Der Begriff "Samen" umfasst auch vegetative Vermehrungsformen, wie z.B. Rhizomstücke; verwendete Abkürzungen: h Licht = Stunden Beleuchtungsdauer, g AS/ha = Gramm Aktivsubstanz je Hektar, l/ha = Liter je Hektar, S = sensitiv, R = resistent)

1. Unkrautwirkung im Vorauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

2. Unkrautwirkung im Nachauflauf: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16h Licht, Temperatur Tag 20-22°C, Nacht 15-18°C) bis zum Applikationszeitpunkt kultiviert. Die Töpfe wurden zu unterschiedlichen BBCH Stadien zwischen 11-25 der Samen/Pflanzen, d.h. in der Regel zwischen zwei bis drei Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

3. Selektivitätswirkung im Vorauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden im BBCH Stadium 00-10 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert.

4. Selektivitätswirkung im Nachauflauf: Samen unterschiedlicher Kulturarten (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 11-32 der Samen/Pflanzen, d.h. in der Regel zwischen zwei bis vier Wochen nach Beginn der Anzucht, auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert

5. Unkrautwirkung im Vor- und Nachauflauf bei unterschiedlichen Kultivierungsbedingungen: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die Bewässerung wurde entsprechend der Fragestellung variiert. Dabei wurden die einzelnen Vergleichsgruppen in Abstufungen in einem Bereich von oberhalb des PWP (permanenter Welkepunkt) und bis zum Niveau der maximalen Feldkapazität mit Wasser versorgt.

6. Unkrautwirkung im Vor- und Nachauflauf bei unterschiedlichen Bewässerungsbedingungen: Samen unterschiedlicher Unkraut und Ungras Biotypen (Herkünfte) wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert. Die einzelnen Vergleichsgruppen wurden dabei unterschiedlichen Bewässerungstechniken ausgesetzt. Die Bewässerung erfolgte entweder von unten oder in Abstufungen von oben (simulierte Beregnung).

7. Unkrautwirkung im Vor- und Nachauflauf bei unterschiedlichen Bodenbedingungen: Samen unterschiedlicher Unkraut und Ungras Biotypen (Herkünfte) wurden in einem mit natürlicher Erde gefüllten Topf von 8-13 cm Durchmesser ausgesät und mit einer Abdeckschicht des Bodens von etwa 1cm abgedeckt. Für einen Vergleich der herbiziden Wirkung wurden die Pflanzen in unterschiedlichen Anzuchterden, von einem sandigen Boden bis schweren Tonboden und verschiedenen organischen Substanzgehalten, kultiviert. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

8. Unkrautwirkung im Vor- und Nachauflauf zur Bekämpfung resistenter Ungras- / Unkrautarten: Samen unterschiedlicher Unkraut und Ungras Biotypen (Herkünfte) mit unterschiedlichen Resistenzmechanismen gegenüber verschiedenen Wirkmechanismen wurden in einem mit natürlicher Erde eines Standardfeldbodens (lehmiger Schluff; nicht steril) gefüllten Topf von 8-13 cm Durchmesser ausgesät und mit einer Abdeckschicht des Bodens von etwa 1 cm abgedeckt.. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

9. Unkrautwirkung und Kulturselektivität im Vor- und Nachauflauf bei unterschiedlichen Aussaatbedingungen: Samen unterschiedlicher Unkraut, Ungras Biotypen (Herkünfte) und Kulturarten (Herkünfte) wurden in einem mit natürlicher Erde gefüllten Topf von 8-13 cm Durchmesser ausgesät und mit einer Abdeckschicht des Bodens von etwa 0-5cm abgedeckt. Die Töpfe wurden anschließend in einem Gewächshaus (12-16 h Licht, Temperatur Tag 20-22°C, Nacht 15-18°C) bis zum Applikationszeitpunkt kultiviert. Die Töpfe wurden zu unterschiedlichen BBCH Stadien 00-25 der Samen/Pflanzen auf einer Laborspritzbahn mit Spritzbrühen mit den erfindungsgemäßen Mitteln, Mischungen beziehungsweise mit den einzeln angewandten Komponenten als WG, WP, EC oder anderen Formulierungen behandelt. Die Wasseraufwandmenge für die Spritzapplikation betrug 100-600 l/ha. Nach der Behandlung wurden die Pflanzen wieder in den Gewächshäusern aufgestellt und nach Bedarf gedüngt und bewässert. Die Töpfe wurden in einem Gewächshaus (12-16 h Licht, Temperatur Tag 20-22°C, Nacht 15-18°C) kultiviert.

Feldversuche

In Feldversuchen wurden unter natürlichen Bedingungen bei praxisüblicher Feldvorbereitung und mit natürlicher oder künstlicher Verseuchung mit Schadpflanzen vor oder nach der Aussaat der Kulturpflanzen bzw. vor oder nach dem Auflaufen der Schadpflanzen die erfindungsgemäßen Mittel, Mischungen des Standes der Technik beziehungsweise die Einzelkomponenten appliziert und im Zeitraum von 4 Wochen bis 8 Monaten nach Behandlung im Vergleich zu unbehandelten Teilstücken (Parzellen) visuell bonitiert. Dabei wurden die Schädigungen der Kulturpflanzen und die Wirkung gegen Schadpflanzen prozentual erfasst, ebenso wie die weiteren Effekte der jeweiligen Versuchsfrage.

b) Ergebnisse

Folgende Abkürzungen wurden verwendet:

BBCH = BBCH-Code gibt Auskunft über das morphologische Entwicklungsstadium einer Pflanze. Die Abkürzung steht offiziell für die Biologische Bundesanstalt, Bundessortenamt und Chemische Industrie. Der Bereich von BBCH 00-10 steht für die Stadien der Keimung der Samen bis zum Durchstoßen der Oberfläche. Der Bereich von BBCH 11-25 steht für die Stadien der Blattentwicklung bis zur Bestockung (entsprechend Anzahl der Bestockungstriebe bzw. Seitensprosse).

PE = Vorauflaufapplikation auf den Boden; BBCH der Samen/Pflanzen 00-10.

PO = Nachauflaufapplikation auf die grünen Pflanzenteile; BBCH der Pflanzen 11-25.

HRAC = 'Herbicide Resistance Action Committee', welches die zugelassenen Wirkstoffe nach ihrem Wirkmechanismus (syn. 'Mode of Action'; MoA) einteilt.

HRAC Gruppe A = Acetylcoenzym-A-Carboxylase Inhibitoren (MoA: ACCase). HRAC Gruppe B = Acetolactatsynthase Inhibitoren (MoA: ALS).

AS = Aktivsubstanz (bezogen auf 100% Wirkstoff; syn. a.i. (englisch)).

Dosis g AS/ha = Aufwandmenge in Gramm Aktivsubstanz pro Hektar.

Für die Bezeichnung der jeweiligen Weidelgras-Biotypen in den Ergebnissen wurden die botanischen Bezeichnungen, u.a. *Lolium spp.* (LOLSS), *Lolium multiflorum* (LOLMU), *Lolium perenne* (LOLPE) verwendet (in Klammern: EPPO-Code bzw. ehemaliger Bayer-Code).

Die Wirkungen der erfindungsgemäßen herbiziden Mittel entsprechen den gestellten Anforderungen und lösen damit die Aufgabe der Verbesserung des Anwendungsprofils des herbiziden Wirkstoffs Aclonifen (u.a. Bereitstellung flexiblerer Lösungen in Bezug auf notwendige Aufwandmengen bei gleichbleibender bis gesteigerter Wirksamkeit).

Soweit herbizide Effekte der erfindungsgemäßen Mittel im Vergleich mit Mischungen des Standes der Technik beziehungsweise mit einzeln angewendeten Komponenten gegen wirtschaftlich bedeutende mono- und dikotyle Schadpflanzen im Focus standen, wurden die synergistischen herbiziden Wirkungen anhand der 'Colby-Formel' (vgl. S.R. Colby; Weeds 15 (1967), 20-22) berechnet:

$$E^C = (A + B + C) - (AxB + AxC + BxC)/100 + (AxBxC)/10000$$

worin bedeutet:

A, B, C = jeweils Wirkung der Komponenten A bzw. B bzw. C in Prozent bei einer Dosierung von a bzw. b bzw. c Gramm AS/ha;

$E^C$ = Erwartungswert nach Colby in % bei einer Dosierung von a + b + c Gramm AS/ha.

Δ = Differenz (%) von gemessenem Wert (%) zu Erwartungswert (%) (gemessener Wert minus Erwartungswert).

Auswertung: - gemessene Werte: jeweils für (A), (B) und (C) und (A)+(B)+(C) in %.

Bewertung: - gemessener Wert (%) grösser > als $E^C$ : ≙ Synergismus (+Δ).

- gemessener Wert (%) gleich = $E^C$ : ≙ Additive Wirkung (±0Δ).

- gemessener Wert (%) kleiner < als $E^C$ : ≙ Antagonismus (-Δ).

Tabelle 1: Vergleich der Wirkung der Mischung auf verschiedene Weidelgras-Biotypen - Gewächshausversuch; Nachauflaufbehandlung (PO, BBCH 11).

|  | Dosis g AS/ha | *Lolium spp.* Resistent gegen HRAC Gruppe A | *Lolium spp.* Resistent gegen HRAC Gruppe B |
|---|---|---|---|
| (A) Aclonifen | 225 | 25 | 50 |
| (B) Tri-allate | 375 | 20 | 20 |
| (C) Flufenacet | 60 | 40 | 70 |
| (A) + (B) + (C) | 225+375+60 | 88 | 90 |
| Kalkulation nach Colby |  | $E^c$ =64; Δ +24 | $E^c$ =88; Δ +2 |
| Pinoxaden + Cloquintocet-mexyl [1]; HRAC-Gruppe A (ACCase) | 60+15 | 40 | - |
| Mesosulfuron + Iodosulfuron + Mefenpyr [1]; HRAC-Gruppe B (ALS) | 15+3+45 | - | 0 |

Anmerkung: Verwendung der Produkte BANDUR für Aclonifen, AVADEX BW für Triallate und CADOU 500SC für Flufenacet; (1) Vergleichsprodukt zur Darstellung der vorhandenen Resistenz in den unterschiedlichen Biotypen.

Bei der untersuchten Pflanzenart konnte durch die Mischung eine deutliche synergistische Wirkung gegen die resistenten Biotypen der HRAC-Gruppen A und B nachgewiesen werden (Δ +24% bzw. Δ +2%).

**Patentansprüche**

1.  Herbizide Mittel, enthaltend als herbizid wirksame Bestandteile

    A) Aclonifen (Komponente A),
    B) Tri-allate (Komponente B) und
    C) Flufenacet (Komponente C).

2.  Herbizide Mittel nach Anspruch 1, worin die Herbizid-Komponenten im nachstehend angegebenen Gewichtsverhältnis zueinander stehen:

    (Bereich Komponente A) : (Bereich Komponente B) : (Bereich Komponente C) im allgemeinen (1 - 100) : (1 - 100) : (1 - 2000),
    vorzugsweise (1 - 25) : (1 - 25) : (1 - 40),
    besonders bevorzugt (1 - 10) : (1 - 10) : (1 - 10).

3.  Herbizide Mittel nach Anspruch 1 oder 2, enthaltend für die jeweiligen Herbizid-Komponenten nachstehend angegebenen Aufwandmengen:

    Komponente A: im allgemeinen 10 - 5000 g AS/ha, vorzugsweise 80 - 3000 g AS/ha, besonders bevorzugt 80 - 1000 g AS/ha Aclonifen;
    Komponente B: im allgemeinen 100 - 3600 g AS/ha, vorzugsweise 250 - 2000 g AS/ha, besonders bevorzugt 250 - 1600 g AS/ha Tri-allate;
    Komponente C: im allgemeinen 10 - 2000 g AS/ha, vorzugsweise 30 - 400 g AS/ha, besonders bevorzugt 50 - 300 g AS/ha Flufenacet.

4.  Herbizide Mittel nach einem der Ansprüche 1 bis 3, zusätzlich enthaltend im Pflanzenschutz übliche Zusatzstoffe und/oder Formulierungshilfsmittel.

5.  Herbizide Mittel nach einem der Ansprüche 1 bis 4, zusätzlich enthaltend eine oder mehrere weitere Komponenten aus der Gruppe agrochemischer Wirkstoffe umfassend Insektizide, Fungizide und Safener.

6.  Verwendung der nach einem der Ansprüche 1 bis 5 definierten herbiziden Mittel zur Bekämpfung von Schadpflanzen.

7.  Verwendung der nach einem der Ansprüche 1 bis 5 definierten herbiziden Mittel zur Bekämpfung von herbizidresistenten Schadpflanzen.

8.  Verfahren zur Bekämpfung von unerwünschtem Pflanzenwuchs, worin die Komponenten A, B und C der herbiziden Mittel, definiert gemäß einem der Ansprüche 1 bis 5, gemeinsam oder getrennt auf die Pflanzen, Pflanzenteile, Pflanzensamen oder die Fläche, auf der die Pflanzen wachsen, appliziert werden.

9.  Verfahren nach Anspruch 8 zur selektiven Bekämpfung von Schadpflanzen in Pflanzenkulturen.

10. Verfahren nach Anspruch 9, worin die Pflanzenkulturen gentechnisch verändert oder durch Mutationsselektion erhalten wurden.

**Claims**

1.  Herbicidal composition comprising, as sole herbicidally active constituents,

    A) aclonifen (component A),
    B) pendimethalin (component B) and
    C) diflufenican (component C).

**2.** Herbicidal composition according to claim 1, wherein the herbicide components, with respect to one another, are present in the weight ratio stated below:

(range component A) : (range component B) : (range component C)
generally (1 - 100) : (1 - 100) : (0.1 - 100),
preferably (1 - 25) : (1 - 25) : (0.5 - 50),
particularly preferably (1 - 10) : (1 - 10) : (1 - 10).

**3.** Herbicidal composition according to claim 1 or 2, comprising the respective herbicide components in the application rates stated below:

component A: generally 10 - 5000 g of AS/ha, preferably 80 - 3000 g of AS/ha, particularly preferably 80 - 1000 g of AS/ha of aclonifen;
component B: generally 500 - 3000 g of AS/ha, preferably 500 - 2500 g of AS/ha, particularly preferably 500 - 1200 g of AS/ha of pendimethalin;
component C: generally 1 - 500 g of AS/ha, preferably 10 - 300 g of AS/ha, particularly preferably 30 - 200 g of AS/ha of diflufenican.

**4.** Herbicidal composition according to any of claims 1 to 3, additionally comprising formulation auxiliaries and/or additives customary in crop protection.

**5.** Herbicidal compositions according to any of claims 1 to 4, additionally comprising one or more further components from the group of agrochemical active compounds comprising insecticides, fungicides and safeners.

**6.** Use of the herbicidal compositions defined in any of claims 1 to 5 for controlling harmful plants.

**7.** Use of the herbicidal compositions defined in any of claims 1 to 5 for controlling herbicide-resistant harmful plants.

**8.** Method for controlling unwanted vegetation which comprises applying the components A, B and C of the herbicidal compositions, defined in any of claims 1 to 5, jointly or separately to the plants, plant parts, plant seeds or the area on which the plants grow.

**9.** Method according to claim 8 for the selective control of harmful plants in plant crops.

**10.** Method according to claim 9 in which the plant crops are genetically modified or have been obtained by mutation selection.

**Revendications**

**1.** Agents herbicides, contenant en tant que constituants à effet herbicide,

A) de l'aclonifène (composant A),
B) du tri-allate (composant B) et
C) du flufénacet (composant C).

**2.** Agents herbicides selon la revendication 1, dans lesquels les composants herbicides sont présents en le rapport en poids indiqué ci-après les uns par rapport aux autres :

(plage du composant A) : (plage du composant B) : (plage du composant C)
généralement (1 à 100) : (1 à 100) : (1 à 2 000),
de préférence (1 à 25) : (1 à 25) : (1 à 40),
de manière particulièrement préférée (1 à 10) : (1 à 10) : (1 à 10).

**3.** Agents herbicides selon la revendication 1 ou 2, contenant les quantités indiquées ci-après pour les composants herbicides respectifs :

composant A : généralement 10 à 5 000 g de SA/ha, de préférence 80 à 3 000 g de SA/ha, de manière particulièrement préférée 80 à 1 000 g de SA/ha d'aclonifène ;

composant B : généralement 100 à 3 600 g de SA/ha, de préférence 250 à 2 000 g de SA/ha, de manière particulièrement préférée 250 à 1 600 g de SA/ha de tri-allate ;

composant C : généralement 10 à 2 000 g de SA/ha, de préférence 30 à 400 g de SA/ha, de manière particulièrement préférée 50 à 300 g de SA/ha de flufénacet.

4. Agents herbicides selon l'une quelconque des revendications 1 à 3, contenant en outre des additifs et/ou des adjuvants de formulation usuels dans la protection des plantes.

5. Agents herbicides selon l'une quelconque des revendications 1 à 4, contenant en outre un ou plusieurs composants supplémentaires du groupe des agents actifs agrochimiques comprenant les insecticides, les fongicides et les agents protecteurs.

6. Utilisation des agents herbicides définis selon l'une quelconque des revendications 1 à 5 pour lutter contre des plantes nocives.

7. Utilisation des agents herbicides définis selon l'une quelconque des revendications 1 à 5 pour lutter contre des plantes nocives résistantes aux herbicides.

8. Procédé de lutte contre une végétation indésirable, selon lequel les composants A, B et C des agents herbicides, définis selon l'une quelconque des revendications 1 à 5, sont appliqués ensemble ou séparément sur les plantes, des parties de plantes, les graines des plantes ou la surface sur laquelle les plantes poussent.

9. Procédé selon la revendication 8, pour la lutte sélective contre des plantes nocives dans des cultures de plantes.

10. Procédé selon la revendication 9, selon lequel les cultures de plantes ont été modifiées génétiquement ou ont été obtenues par sélection de mutations.

# EP 2 934 130 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4394159 A
- EP 0007482 A
- US 5858920 A
- AU 635599 B
- AU 642986 B
- AU 641500 B
- AU 659028 B
- AU 663028 B
- AU 712501 B
- US 6046133 A
- EP 0958742 A
- EP 0221044 A
- EP 0131624 A
- WO 92011376 A
- WO 92014827 A
- WO 91019806 A

- EP 0242236 A
- EP 0242246 A
- WO 92000377 A
- EP 0257993 A
- US 5013659 A
- EP 0142924 A
- EP 0193259 A
- WO 91013972 A
- EP 0309862 A
- EP 0464461 A
- EP 0305398 A
- EP 0476555 A
- EP 0048436 A
- EP 0336151 A
- US 4400196 A
- EP 0502014 A

### In der Beschreibung aufgeführte Nicht-Patentliteratur

- The Pesticide Manual. 2009
- The e-Pesticide Manual. 2008
- *The Compendium of Pesticide Common Names, http://www.alanwood.net/pesticides*
- The Pesticide Manual
- Gene Transfer to Plants, Springer Lab Manual. Springer Verlag Berlin, 1995
- **CHRISTOU.** *Trends in Plant Science,* 1996, vol. 1, 423-431
- **SAMBROOK et al.** Molecular Cloning, A Laboratory Manual. Cold Spring Harbor Laboratory Press, 1989
- Gene und Klone. VCH Weinheim, 1996
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- Manual on Development and Use of FAO and WHO Specifications for Pesticides. FAO and WHO, 2002
- **WINNACKER-KÜCHLER.** Chemische Technologie. C. Hanser Verlag, 1986, vol. 7
- **VAN VALKENBURG.** Pesticide Formulations. Marcel Dekker, 1973
- **K. MARTENS.** Spray Drying Handbook. G. Goodwin Ltd, 1979

- **WATKINS.** Handbook of Insecticide Dust Diluents and Carriers. Darland Books
- **OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxiddukte. Wiss. Verlagsgesellschaft, 1976
- Spray-Drying Handbook. G. Goodwin Ltd, 1979
- **J.E. BROWNING.** Agglomeration. *Chemical and Engineering,* 1967, 147 ff
- Perry's Chemical Engineer's Handbook. McGraw-Hill, 1973, 8-57
- **G.C. KLINGMAN.** Weed Control as a Science. John Wiley and Sons, Inc, 1961, 81-96
- **J.D. FREYER ; S.A. EVANS.** Weed Control Handbook. Blackwell Scientific Publications, 1968, 101-103
- Factors Affecting Herbicidal Activity and Selectivity. *Proc. EWRS Symp.,* 1988, 227-232
- Römpp Chemie Lexikon. Thieme Verlag, vol. 2, 1343
- **S.R. COLBY.** *Weeds,* 1967, vol. 15, 20-22